Europäisches Patentamt

(19) **European Patent Office**

**Office européen des brevets**

(11) Numéro de publication: **0 100 025**
**B1**

(12) **FASCICULE DE BREVET EUROPEEN**

(45) Date de publication du fascicule du brevet: **31.08.88**

(51) Int. Cl.⁴: **F 16 D 23/06**

(21) Numéro de dépôt: **83106875.4**

(22) Date de dépôt: **13.07.83**

(54) Dispositif de synchronisation pour boîte de vitesses à crabots.

(30) Priorité: **27.07.82 FR 8213123**

(43) Date de publication de la demande:
**08.02.84 Bulletin 84/06**

(45) Mention de la délivrance du brevet:
**31.08.88 Bulletin 88/35**

(84) Etats contractants désignés:
**BE CH DE GB IT LI SE**

(56) Documents cités:
**DE-B-1 030 692**
**FR-A- 533 129**
**FR-A-2 164 389**
**GB-A- 482 077**
**GB-A- 711 201**
**GB-A-2 007 781**
**US-A-1 935 965**
**US-A-2 062 927**
**US-A-2 328 205**
**US-A-2 359 982**
**US-A-3 305 061**
**US-A-3 424 289**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Vallereau, Annie**
**80 rue du Docteur Guiomis**
**F-92500 Rueil Malmaison (FR)**

(74) Mandataire: **Casalonga, Axel et al**
**BUREAU D.A. CASALONGA OFFICE JOSSE & PETIT Morassistrasse 8**
**D-8000 München 5 (DE)**

Courier Press, Leamington Spa, England.

EP 0 100 025 B1

## Description

La présente invention a pour objet un dispositif de synchronisation destiné à une boîte de vitesses à crabots du type permettant d'interdire le crabotage tant qu'il n'y a pas égalité des vitesses de rotation respectives des pièces à craboter.

De tels dispositifs de synchronisation sont utilisables en particulier pour les boîtes de vitesses de véhicules automobiles. Les dispositifs connus de ce type comportent généralement un baladeur monté sur un moyeu solidaire d'un arbre rotatif. Un anneau de synchronisation comporte une surface conique qui peut coopérer avec une autre surface conique de l'une des pièces à craboter de façon à constituer un petit embrayage maintenu en prise au moyen de la commande de changement de vitesses durant le temps nécessaire pour obtenir l'égalisation des vitesses angulaires des organes à craboter. Le baladeur constitue le premier de ces organes, le deuxième étant un pignon fou monté libre en rotation sur l'arbre portant le moyeu du baladeur.

Dans une dispositif de synchronisation de type connu, l'anneau de synchronisation est muni d'une surface conique externe qui est adaptée pour coopérer avec une surface conique interne du baladeur. L'anneau comprend un certain nombre de pattes dont les flancs coopèrent avec des encoches correspondantes pratiquées dans la denture de crabotage du pignon fou afin de jouer le rôle de moyens d'indexage en rotation de l'anneau par rapport au pignon avant et pendant la synchronisation par égalisation des vitesses de rotation relatives d'une part de l'anneau entraîné avec le baladeur par sa surface conique et d'autre part, du pignon fou.

Dans ce mode de réalisation connu, l'anneau de synchronisation est rappelé par un jonc élastique en position de cercle dont l'une des extrémités est fixée sur le pignon fou.

On constate dans la pratique qu'un tel dispositif présente certain inconvénients. En particulier, l'anneau de synchronisation est difficile à réaliser et nécessite un outillage important compte tenu de sa structure complexe et en particulier de l'existence des pattes d'indexage pratiquées à l'intérieur de l'anneau. De la même manière, la réalisation précise des encoches servant de butées à ces pattes d'indexage dans le pignon fou, est difficile ainsi que l'obtention d'un état de surface convenable en particulier à la jonction entre les encoches et la denture de crabotage du pignon fou. Le fait que le jonc élastique soit fixé à l'une de ses extrémités et ne porte que sur les patte⁻ d'indexage de l'anneau entraîne un mauvais centrage de l'anneau par rapport au cône du baladeur et au pignon fou. Enfin, la structure même de l'anneau de synchronisation fait que le dispositif dans sont ensemble présente un encombrement axial important entraînant un déplacement notable du baladeur par rapport au pignon avant de l'engagement du crabotage ce qui peut présenter des risques de désynchronisation.

On connaît également par le document GB—A—2 007 781 un dispositif de synchronisation dans lequel sont prévus des moyens de blocage de baladeur en position axiale de façon à éviter le laché de crabotage sous couple. Le résultat est obtenu par des dents d'un profil particulier, dont une portion axialement décalée est légèrement plus large. Rien n'est cependant prévu pour l'indexage en rotation au moment de la synchronisation.

La présente invention a donc pour objet de réaliser un dispositif de synchronisation qui supprime ces inconvénients et dans lequel l'indexage en rotation au moment de la synchronisation se fasse directement par la denture de crabotage du pignon fou.

L'invention a également pour objet un dispositif de synchronisation dans lequel un anneau de synchronisation à surface conique se trouve centré par rapport au pignon fou au moyen de la denture de crabotage de ce dernier de façon que l'indexage en rotation avant le début de l'opération de synchronisation se fasse par coopération de deux pièces parfaitement centrées l'une par rapport à l'autre, à savoir l'anneau de synchronisation et le pignon fou.

L'invention a encore pour object d'améliorer la répartition circonférentielle de l'effort de retenue et de rappel exercé par le jonc élastique coopérant avec l'anneau de synchronisation.

Enfin, l'invention a pour object d'utiliser toutes les entrées de dents des crabots de pignon fou pour constituer des rampes d'armement assurant l'indexage en rotation par la coopération de surfaces multiples et précises immédiatement avant la synchronisation.

Le dispositif de synchronisation pour boîte de vitesses à crabots selon l'invention permet d'interdire le crabotage tant qu'il n'y a pas égalité des vitesses de rotation respectives d'un pignon fou monté libre en rotation sur un arbre et d'un baladeur monté sur un moyeu solidaire dudit arbre, le baladeur tournant avec le moyeu et pouvant coulisser axialement par rapport au moyeu. Tel qu'il est revendiqué, le dispositif de synchronisation selon l'invention comprend un anneau de synchronisation muni d'une surface conique externe adaptée pour coopérer avec une surface conique interne du baladeur et de moyens d'indexage en rotation adaptés pour coopérer avec des moyens de butée solidaires du pignon fou; et un jonc élastique de rappel de l'anneau de synchronisation. L'anneau de synchronisation comprend, sur toute la périphérie interne de sa partie arrière, une première denture capable d'engrener avec une denture externe de crabotage pratiquée sur toute la périphérie d'une portion du pignon fou, toutes les dents des deux dentures précitées comportant des entrées de dents munies de rampes d'armement inclinées adaptées pour entrer en contact les unes avec les autres. Selon l'invention l'anneau de synchronisation comprend, en outre, sur toute la périphérie interne de sa partie avant, une pluralité d'encoches dont les flancs sont décalés dans le sens périphérique par rapport aux entrées de dents de la première denture précitée, d'une valeur prédéterminée, de façon que les rampes d'armement précitées soient en contact lorsque les flancs desdites encoches sont en contact avec les flancs des dents de crabotage du pignon fou.

On notera que les deux parties de l'anneau de synchronisation seront appelées dans la suite de la description, partie avant et partie arrière suivant le sens du déplacement de l'anneau de synchronisation vers le pignon fou lors d'un mouvement d'engagement d'un rapport de vitesse.

C'est donc par le contact précis entre les flancs de ces encoches de la partie avant de l'anneau de synchronisation et les flancs des dents de crabotage du pignon fou que se trouve défini avec précision l'indexage en rotation de l'anneau de synchronisation ainsi que la valeur exacte de recouvrement des surfaces des rampes d'armement des entrées de dents respectives de la première denture de l'anneau de synchronisation et de la denture de crabotage du pignon fou.

Les encoches de la partie avant de l'anneau de synchronisation sont de préférence constituées par les entredents d'une deuxième denture pratiquée sur toute la périphérie interne de la partie avant de l'anneau de synchronisation. Le pas de cette deuxième denture est de préférence double de celui de la première denture ce qui permet en pratique d'assurer un recouvrement convenable des faces en contact des rampes d'armement précitées.

Une dent sur deux de la denture de crabotage du pignon fou est coupée sensiblement à mi-hauteur selon une surface cylindrique de centrage concentrique à l'axe du dispositif de synchronisation. Ces surfaces cylindriques coopèrent avec la surface cylindrique également coupée sensiblement à mi-hauteur des dents de la deuxième denture de l'anneau. Dans ces conditions, le centrage exact de l'anneau par rapport au pignon fou est assuré par une dent sur deux de la denture de crabotage du pignon fou.

Un jonc élastique de retenue est de préférence monté de façon à être prisonnier d'une gorge interne séparant les parties avant et arrière de l'anneau de synchronisation. En position de repos ou point mort, avant synchronisation, le jonc élastique est logé dans une gorge externe du pignon fou. De cette manière, lors de l'opération préalable d'indexage en rotation, le jonc élastique de retenue est capable d'exercer un effort à l'encontre du mouvement d'engagement de l'anneau de synchronisation sur le pignon fou.

Le rappel du jonc élastique se fait de préférence au moyen d'une pente de rappel axiale pratiquée sur une dent sur deux de la denture de crabotage du pignon fou. Le jonc élastique se déplace donc sur des surfaces coniques multiples et précises qui sont réparties à la circonférence de la denture de crabotage du pignon fou assurant également de cette manière une meilleure répartition de l'effort de retenue lors de l'armement et de l'indexage en rotation et lors du rappel de l'anneau de synchronisation.

Le baladeur comporte de manière classique une denture interne de crabotage engrenant avec une denture externe du moyeu sur lequel il est monté coulissant. La denture du baladeur présente de préférence pour chaque entredent un décrochement limitant la partie active des dents en contact avec celles du pignon fou.

Pour assurer le maintien du baladeur dans la position choisie après l'engagement d'un rapport de vitesse, les flancs des dentures de crabotage du baladeur et du pignon fou présentent de préférence sur une partie de leur hauteur des faces d'accrochage coniques usinées en queue d'aronde permettant d'éviter le lâcher de crabotage sous couple.

L'invention sera mieux comprise à l'étude de la description détaillée d'un mode de réalisation particulier pris à titre d'exemple nullement limitatif et illustré par les dessins annexés, sur lesquels:

la fig. 1 est une demi-vue en coupe d'un dispositif de synchronisation selon l'invention comportant un baladeur double destiné à coopérer avec deux pignons fous pour l'engagement de deux rapports de vitesse différents;

la fig. 2 est une section partielle selon II—II de la fig. 1;

la fig. 3 est une demi-vue partielle montrant la position des différents organes après l'engagement de l'un des rapports de vitesse;

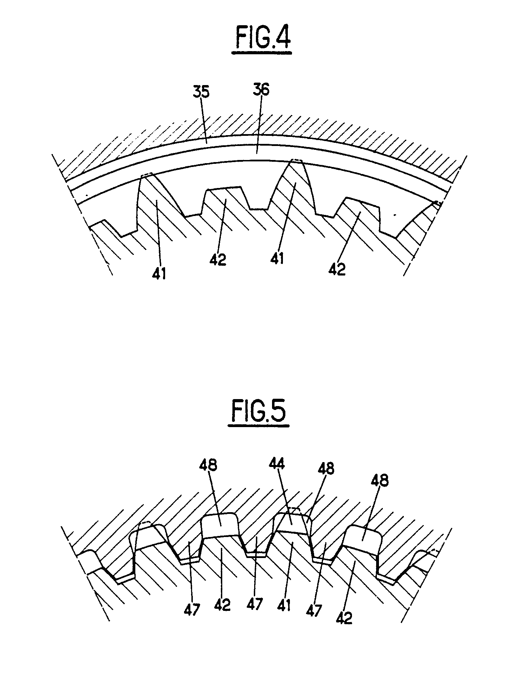

la fig. 4 est une section partielle selon IV—IV de la fig. 3;

la fig. 5 est une section partielle selon V—V de la fig. 3;

la fig. 6 est une vue partielle de côté prise selon la flèche V sur la fig. 1;

la fig. 7 est une vue de dessus schématique en coupe dévelovpée montrant les entrées de dents des différents organes pendant la phase préliminaire d'indexage en rotation;

la fig. 8 est une vue analogue à la fig. 7 montrant les mêmes organes après engagement du rapport de vitesse.

Tel qu'il est représenté sur les figures, le dispositif de synchronisation est monté sur un arbre 1 faisant partie d'une boîte de vitesses et dont la surface périphérique est munie de cannelures 2. Sur l'arbre 1 sont montés deux pignons fous 3 et 4 libres en rotation par rapport à l'arbre 1. Un moyeu cannelé 5 est monté sur l'arbre 1 de façon à être solidaire en rotation de ce dernier par l'intermédiaire des cannelures 2. Le moyeu 5 est maintenu axialement par deux anneaux d'arrêt 6 positionnés dans des gorges 7 de l'arbre 1. Les pignons fous 3 et 4 sont montés de part et d'autre du moyeu 5, l'ensemble étant maintenu axialement entre un épaulement 8 de l'arbre 1 et un anneau d'arrêt 9.

Un baladeur 10 est monté à la périphérie du moyeu 5 de façon à être entraîné en rotation avec ce dernier et coulisser axialement par rapport au moyeu. Le coulissement axial du baladeur 10 par rapport au moyeu 5 est effectué sous l'action d'un organe de commande non représenté qui vient prendre appui dans une gorge périphérique externe 11 du baladeur.

Dans le mode de réalisation illustré sur les figures, le dispositif de synchronisation est double de façon à permettre la synchronisation de chacun des pignons fous 3 et 4. Le baladeur comporte à cet effect deux surfaces coniques internes 12 pratiquées sur deux excroissances annulaires 13 du baladeur 10. Ces surfaces coniques internes 12 coopèrent avec des surfaces coniques externes correspondantes 14 de deux anneaux de synchronisation 15 de structure identique.

Chacun des deux pignons 3 et 4 comporte une denture extérieure 16, 17 destinée à coopérer respectivement avec une roue dentée faisant partie de la boîte de vitesses non représentée sur les figures, de façon à réaliser l'engagement d'un rapport de vitesse déterminé. Le diamètre de la denture 16 du pignon 3 est plus important que celui de la denture 17 du pignon 4 permettant ainsi de définir deux rapports de vitesse différents. Chaque pignon 3, 4 comporte, du côté du moyeu central 5 une portion 18 faisant saillie axialement présentant un diamètre externe sensiblement égal à celui du moyeu 5 et muni extérieurement d'une denture de crabotage 19.

Les éléments constituant le dispositif de synchronisation double illustré sur les figures étant identiques pour la synchronisation de chacun des pignons fous 3 et 4 on va maintenant décrire uniquement la structure et le fonctionnement des organes de synchronisation du pignon fou 3 étant entendu que les organes de synchronisation du pignon fou 4 sont identiques et portent les mêmes références sur les dessins.

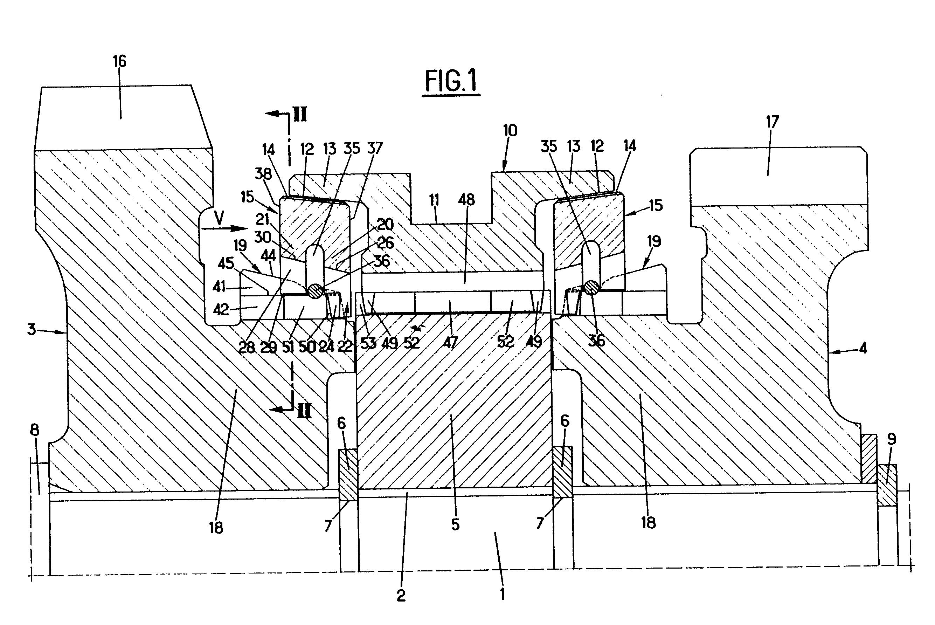

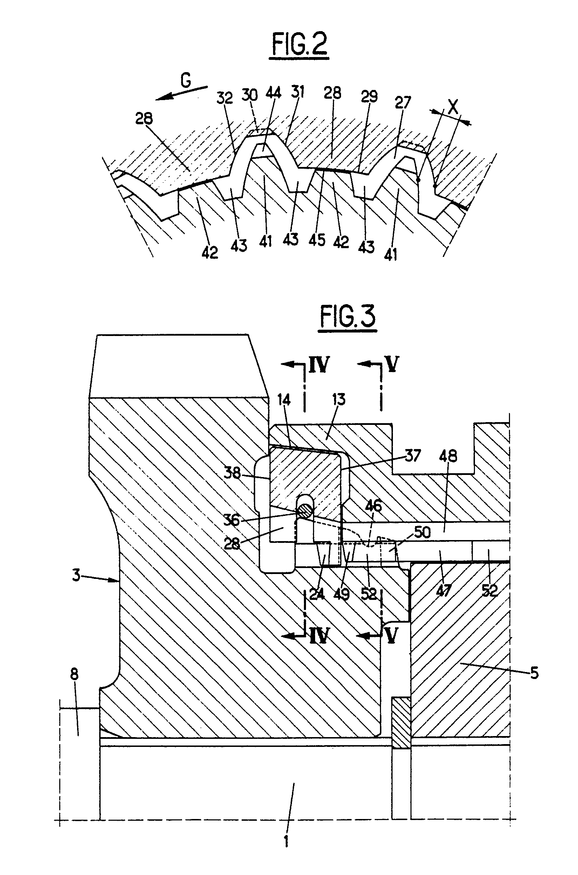

L'anneau de synchronisation 15 comprend une partie arrière 20 et une partie avant 21, la partie avant 21 étant repérée dans le sens du mouvement de l'anneau de synchronisation 15 en direction du pignon fou 3 lors de l'engagement d'un rapport de vitesse par déplacement du baladeur 10 depuis la position illustrée sur la fig. 1 jusqu'à la position illustrée sur la fig. 3.

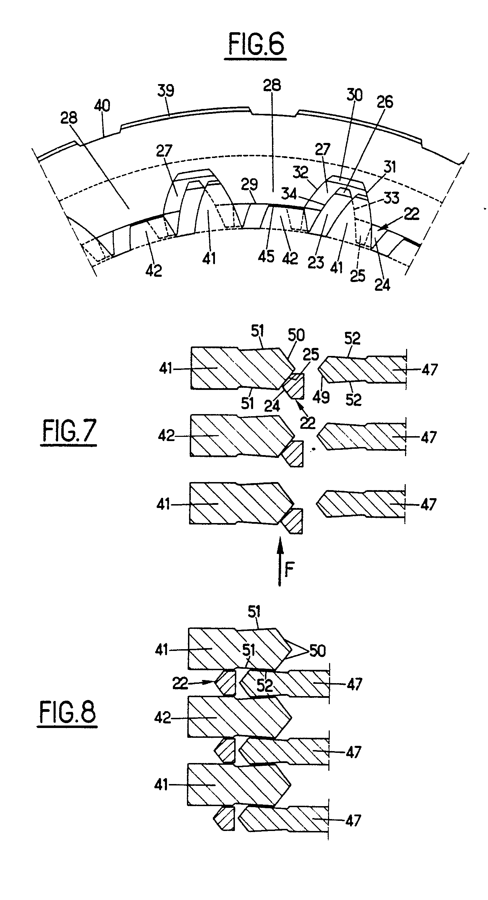

Sur toute la périphérie interne de la partie arrière 20, l'anneau de synchronisation présente une première denture constituée par des dents 22 et des entredents 23 (Fig. 6). Chaque dent 22 présente une entrée de dent munie de rampes d'armement inclinées 24 et 25 de façon à définir sensiblement une forme de coin. L'alésage interne de l'ensemble des entredents 23 présente une surface conique 26.

Sur toute la périphérie interne de la partie avant 21, l'anneau de synchronisation 15 comporte une pluralités d'encoches constituées par les entredents 27 d'une deuxième denture dont les dents 28 sont coupées sensiblement à mi-hauteur formant ainsi une surface cylindrique 29 (fig. 2 et 6).

La surface interne des entredents 27 est une surface conique 30 de même inclinaison que la surface conique 26.

Les flancs 31 et 32 des entredents 27 sont décalés dans le sens périphérique par rapport aux flancs 33 et 34 des entredents 23. La première denture est de ce fait également décalée par rapport aux entrées de dents 24, 25 des dents 22.

Dans l'exemple illustré sur les figures, le pas de la deuxième denture 27, 28 est double de celui de la première denture 22, 23. On pourrait cependant adopter un rapport différent.

Une gorge interne 35 (fig. 1) sépare les parties arrière 20 et avant 21 de l'anneau de synchronisation 15, ladite gorge 35 étant pratiquée radialement dans l'anneau 15 et présentant une largeur adaptée pour recevoir un jonc élastique de retenue 36 constitué par exemple par un anneau métallique de forme semi-circulaire coupé à un endroit de façon à assurer une élasticité convenable par déformation.

Comme on peut le voir sur les fig. 1 et 3, l'anneau de synchronisation 15 présente une section de forme générale simple, sensiblement trapézoïdale. En effet, il comporte deux faces frontales radiales planes 37 et 38, une face externe conique 14 et un alésage interne qui est défini par les deux dentures 27, 28 et 22, 23. Sur cet alésage interne seules les têtes des dents 22 font donc saillie vers l'intérieur. Il en résulte que l'anneau de synchronisation 15 constitue une pièce mécanique relativement simple à usiner ayant sensiblement la même raideur dans le sens radial et dans le sens axial et dont le centre de gravité est sensiblement médian. Les deux dentures 27, 28 et 22, 23 taillées en développante de cercle sont faciles à réaiser avec le précision d'usinage nécessaire. On notera que la surface conique externe 14 de l'anneau de synchronisation 15 présente un filet légèrement en saillie 39 ainsi que des rainures 40 également réparties sur la périphérie de façon à faciliter l'évacuation de l'huile (fig. 6).

La denture externe de crabotage 19 disposée sur la portion 18 du pignon fou 3 comprend des dents 41 alternant avec des dents 42 séparées par des entredents 43 (fig. 2). Chacune des dents 41 présente une surface extérieure conique définissant une pente 44. Chacune des dents 42 est coupée sensiblement à mi-hauteur définissant ainsi une surface cylindrique de centrage 45 concentrique à l'axe du dispositif de synchronisation et coopérant avec le surface cylindrique 29 également coupée à mi-hauteur des dents 28 de l'anneau de synchronisation 15. En d'autres termes, chaque dent 28 de la denture de la partie avant 21 de l'anneau de synchronisation 15 vient s'appuyer par son alésage sur la surface cylindrique externe 45 d'une dent 42 sur deux de la denture de crabotage 19 du pignon fou 3. L'anneau de synchronisation 15 se trouve donc parfaitement centré par rapport au pignon fou 3 par une multitude de portions cylindriques de contact définies sur les dentures correspondantes de l'anneau de synchronisation 15 et du crabot 19.

Les dents 41 présentent en outre une gorge externe 46 visible en particulier sur la fig. 3 adaptée pour loger dans la position de repos correspondant au point mort, le jonc élastique 36 comme on peut le voir sur la fig. 1. Dans cette position, le jonc élastique 36 toujours prisonnier de la gorge interne 35 de l'anneau de synchronisation 15 exerce un effort de retenue grâce à l'existence de la gorge 46, à l'encontre du mouvement d'engagement de l'anneau 15. Le jonc élastique 36 et la gorge externe 46 jouent donc le rôle de moyen de butée pour l'anneau de synchronisation 15 lors de la phase de fonctionnement préliminaire à la synchronisation. Les pentes axiales de rappel 44 permettant quant à elles le mouvement de retour du jonc élastique 36 et de l'anneau 15 en direction de la position de repos illustrée sur la fig. 1.

La denture de crabot 19 du pignon fou 3 comporte des entrées de dents à faces inclinées 50. Ces faces inclinées 50 visibles en particulier sur les fig. 7 et 8 constituent des rampes d'armement capables d'entrer en contact avec les entrées de dents de forme inclinée correspondante 24 ou 25 des dents 22 comme on peut le voir notamment sur la fig. 7.

Le baladeur 10 comporte une denture interne de crabotage comprenant des dents 47 (fig. 5), chaque entredent présentant un décrochement 48 limitant la partie active des dents 47. De chaque côté du baladeur 10, les dents 47 comportent des entrées de dents 49 (fig. 1 et 3) munies de faces inclinées en forme de coin.

La retenue en position du rapport de vitesse choisie est réalisée par un accrochage conique constitué par des faces usinées en queue d'aronde 51 sur les portions basses des dents 41 et 42 du pignon fou 3 ainsi que des faces correspondantes également usinées en queue d'aronde 52 sur les dents 47 du baladeur.

La denture de crabotage constituée par les dents 47 du baladeur 10 coopère en outre avec une denture correpondante pratiquée à la périphérique du moyeu 5 et dont les dents 53 sont visibles en particulier sur la fig. 1.

Toutes les dentures précitées sont taillées de préférence en développante de cercle.

Le fonctionnement du dispositif de synchronisation selon l'invention est le suivant. Le baladeur 10 est tout d'abord soumis à un effort tendant à le déplacer, par exemple vers la gauge de la fig. 1 lorsque l'on désire engager le rapport de vitesse correspondant au pignon fou 3. Le cône interne 12 du baladeur 10 exerce dont une poussée sur la surface conique externe 14 de l'anneau de synchronisation 15. L'anneau 15, centré comme il a été indiqué précédemment par rapport au pignon fou 3 par la coopération des surfaces cylindriques correspondantes 29 et 45, est retenu par le jonc élastique 36 coopérant avec la gorge 46. Le mouvement axial du baladeur 10 se trouve donc stoppé tant que le pignon fou 3 et le baladeur 10 entraîné par le moyeu 5 ont une vitesse relative l'une par rapport à l'autre. Dès l'entrée en contact des surfaces coniques respectives 14 de l'anneau 15 et 12 du baladeur 10, l'anneau de synchronisation 15 subit une rotation, par exemple dans le sens de la flèche G sur la fig. 2 jusqu'à ce que les faces 31 des entredents 27 entrent en contact avec les flancs des dents 41 de la denture de crabot 19. La valeur exacte de ce déplacement est référencée X sur la fig. 2 et elle peut être définie avec précision au moment de l'usinage des différentes dentures. La position après rotation de la valeur X est représentée sur la fig. 6. Dans cette position, les faces 25 des dents 22 de l'anneau de synchronisation 15 sont en contact avec les rampes d'armement 50 des entrées de dents des dents 41 et 42 de la denture de crabot 19 du pignon fou 3.

Autrement dit, la position précise ou indexage en rotation de l'anneau de synchronisation 15 par rapport au pignon fou 3, est obtenue par les encoches de la denture de la partie avant 21 de l'anneau de synchronisation 15 qui coopèrent avec les dents de la denture de crabotage 19. Cet indexage se fait donc sur une multitude de surfaces usinées avec précision. Par ailleurs, la valeur du recouvrement, c'est-à-dire la surface de contact entre la rampe d'armement 50 et l'entrée de dent 25 se trouve ainsi définie avec précision par l'indexage en rotation.

Tant qu'une vitesse relative subsiste entre le baladeur 10 et le pignon fou 3, une force s'exerce selon la flèche F de la fig. 7 entraînant un frottement tel qu'il empêche tout mouvement axial de l'anneau de synchronisation 15 même lors d'un effort axial important sur le baladeur 10. Lorsque la vitesse relative entre le pignon 3 et le baladeur 10 s'annule, il y a synchronisation des vitesses de rotation respectives du baladeur 10 et du pignon fou 3. Le couple de frottement symbolisé par la flèche F de la fig. 7 s'annule. Il est alors possible, compte tenu de l'effort exercé axialement sur le baladeur 10, de rattraper le décalage angulaire de l'anneau 15 par rapport au pignon fou 3, les deux dentures de l'anneau de synchronisation 15 pouvant alors pénétrer axialement dans la denture de crabotage 19 du pignon fou 3 comme illustré sur la fig. 8. L'anneau de synchronisation 15 est déplacé axialement, l'effort sur le baladeur 10 étant suffisant pour vaincre l'effort élastique du jonc 36 et faire sortir ce dernier de la gorge 46. L'anneau de synchronisation 15 se déplace jusque dans la position illustrée sur la fig. 3. On notera que pendant tout ce déplacement, l'anneau de synchronisation 15 reste parfaitement centré par rapport au pignon fou 3 par les surfaces cylindriques correspondantes 29 et 45. Le jonc élastique 36, dont les extrémités sont libres, se dilate en se déplaçant sur les pentes axiales 44 des dents 41 restant prisonnier de la gorge interne 35 de l'anneau 15. Après un léger déplacement axial de l'anneau de synchronisation 15, les dents 47 du baladeur 10 peuvent pénétrer dans les entredents de la denture de crabot 19 du pignon fou 3 assurant ainsi le crabotage comme illustré sur la fig. 3. La retenue du rapport de vitesse est assurée, comme on le voit notamment sur la fig. 8, par les faces usinées en queue d'aronde 51 et 52.

Le dispositif de synchronisation selon l'invention utilise donc la denture de crabot 19 des pignons fous comme moyen d'indexage et d'armement préalable à la synchronisation. Des rampes de rappel 44 sont pratiquées sur les sommets des dents 41 du crabot 19 assurant ainsi le retour au point mort de l'anneau de synchronisation 15. L'anneau de synchronisation 15 se trouve parfaitement centré pendant tout son déplacement par rapport à la denture de crabot 19 du pignon fou 3. La position axiale de l'anneau de synchronisation 15 est définie avec précision par l'intermédiaire de la gorge 46 qui permet le logement du jonc élastique 36.

Les ramples d'armement 50 sont constituées par toutes les entrées de dents de la denture de crabot 19 du pignon fou permettant ainsi d'obtenir une faible surface recouvrement sur des faces multiples et usinées avec précision.

Le déplacement du jonc élastique sur un multitude de surfaces coniques également usinées avec précision et réparties à la circonférence de la denture de crabot 19 permet de maintenir parfaitement coaxiaux les efforts d'armement et de rappel.

Il est possible d'utiliser un grand diamètre primitif pour la denture de crabotage 19 ainsi qu'un petit module et un pas angulaire réduit, facilitant ainsi le crabotage.

Enfin, la structure du dispositif de l'invention permet de diminuer notablement le déplacement du baladeur avant crabotage réduisant ainsi sensiblement les risques de désynchronisation.

**Revendications**

1. Dispositif de synchronisation pour boîte de vitesses à crabots permettant d'interdire le crabotage tant qu'il n'y a pas égalité des vitesses de rotation respectives d'un pignon fou (3, 4) monté libre en rotation sur un arbre (1) et d'un baladeur (10) monté sur un moyeu (5) solidaire dudit arbre, le baladeur (10) tournant avec le moyeu (5) et pouvant coulisser axialement par rapport au moyeu, du type comprenant: un anneau de synchronisation (15) muni d'une surface conique externe (14) adaptée pour coopérer avec une surface conique interne (12) du baladeur et de moyens d'indexage en rotation adaptés pour coopérer avec des moyens de butée solidaires du pignon fou; et un jonc élastique (36) de rappel de l'anneau de synchronisation (15); l'anneau de synchronisation comprenant sur toute la périphérie interne de sa partie arrière (20), une première denture (22, 23) capable d'engréner avec une denture externe de crabotage (41, 42, 43) pratiquée sur toute la périphérie d'une portion (18) du pignon fou (3, 4), toutes les dents des deux dentures précitées comportant des entrées de dent munies de rampes d'armement inclinées (24, 25, 50) adaptées pour entrer en contact les unes avec les autres; caractérisé par le fait que l'anneau de synchronisation (15) comprend en outre: sur toute la périphérie interne de sa partie avant (21) une pluralité d'encoches (27) dont les flancs (31, 32) sont décalés dans le sens périphérique par rapport aux entrées de dents (22) de la première denture précitée d'une valeur prédéterminée de façon que les rampes d'armement précitées (24, 25, 50) soient en contact lorsque les flancs (31, 32) desditss encoches (27) sont en contact avec les flancs des dents de crabotage (41) du pignon fou (3, 4).

2. Dispositif de synchronisation selon la revendication 1, caractérisé par le fait que les encoches précitées (27) sont constituées par les entredents d'une deuxième denture pratiquée sur toute la périphérie interne de la partie avant (21) de l'anneau (15).

3. Dispositif de synchronisation selon la revendication 2, caractérisé par le fait que le pas de la deuxième denture est double de celui de la première denture.

4. Dispositif de synchronisation selon les revendications 2 ou 3, caractérisé par le fait qu'une dent sur deux (42) de la denture de crabotage du pignon fou est coupée sensiblement à mi-hauteur selon une surface cylindrique de centrage (45) concentrique à l'axe du dispositif et coopérant avec la surface cylindrique (29) également coupée sensiblement à mi-hauteur des dents (28) de la deuxième denture de l'anneau (15).

5. Dispositif de synchronisation selon l'une quelconque des revendications précédentes, caractérisé par le fait qu'il comprend un jonc élastique de retenue (36) prisonnier d'une gorge interne (35) séparant les parties avant et arrière (21, 20) de l'anneau (15) et pouvant être logé au repos dans une gorge externe (46) du pignon fou (3, 4) de façon à exercer un effort à l'encontre du mouvement d'engagement de l'anneau (15) sur le pignon fou (3, 4).

6. Dispositif de synchronisation selon la revendication 5, caractérisé par le fait qu'une dent sur deux (41) de la denture de crabotage du pignon fou présente une pente de rappel axial (44) avec laquelle peut coopérer le jonc élastique (36) lors du mouvement d'engagement de l'anneau (15) sur le pignon fou.

7. Dispositif de synchronisation selon l'une quelconque des revendications précédentes, caractérisé par le fait que le baladeur (10) comporte une denture interne de crabotage (47) engrenant avec une denture externe (53) du moyeu (5) sur lequel il est monté coulissant, ladite denture interne (47) pouvant coopérer avec la denture externe de crabotage (19) du pignon fou (3, 4).

8. Dispositif de synchronisation selon la revendication 7, caractérisé par le fait que les entredents de la denture du baladeur (10) présentent un décrochement (48) limitant la partie active des dents (47) en contact avec celle du pignon (3, 4).

9. Dispositif de synchronisation selon les revendications 7 ou 8, caractérisé par le fait que les flancs des dentures de crabotage du baladeur (10) et du pignon fou (3, 4) présentent sur une partie de leur hauteur des faces d'accrochage coniques (51, 52) en queue d'aronde permettant d'éviter le lâcher du crabotage sous couple.

10. Dispositif de synchronisation selon l'une quelconque des revendications précédentes, caractérisé par le fait que l'anneau de synchronisation (15) présente une section de forme générale simple, sensiblement trapézoïdale.

11. Dispositif de synchronisation selon l'une quelconque des revendications précédentes, caractérisé par le fait qu'il comprend un baladeur double (10) muni de deux surfaces coniques internes (12), deux anneau de synchronisation (15) identiques disposés symétriquement de chaque côté du baladeur (10) coopérant chacun avec une denture de crabot (19) de pignon fou (3, 4) et un jonc élastique de retenue (36).

**Patentansprüche**

1. Synchronisierungsanordnung für ein Klauenschaltgetriebe, das es erlaubt, den Klaueneingriff zu verhindern, wenn die Drehzahlen eines auf einer Welle (1) frei drehbar angeordenten Leerlaufritzels (3, 4) und eines auf einer mit dieser Welle fest verbundenen Nabe (5) angeordneten Schieberades (10) nicht gleich sind, wobei sich das Schieberad (10) mit der Nabe (5) dreht und axial relativ zu dieser verschiebbar ist, und die einen Synchronisierungsring (15) mit einer konischen Außenfläche (14), die mit einer konischen Innenfläche (12) des Schieberades zusammenwirken kann, und mit Drehrastmitteln, die mit mit dem Leerlaufritzel fest verbundenen Anschlagmitteln zusammenwirken können, und einen elastischen Sprengring (36) zum Rückstellen des Synchronisierungsringes (15) aufweist, und wobei der Synchronisierungsring entlang des gesamten Innenumfanges seines hinteren Teils (20) eine erste Zahnung (22, 23) aufweist, die mit einer über dem gesamten Umfang eines Teils (18) des Leerlaufritzels (3, 4) vorgesehen Klauen-Außenzahnung (41, 42, 43) kämmen kann, wobei alle Zähne der beiden Zahnungen mit Zahneinfahröffnungen mit geneigten Einfahrrampen (24, 25, 50) ausgeführt sind, die in gegenseitige Berührung treten können, dadurch gekennzeichnet, daß der Synchronisierungsring (15) weiterhin über dem gesamten Innenumfang seines vorderen Teils (21) eine Mehrzahl von Einkerbungen (27) aufweist, deren Flanken (31, 32) in Umfangsrichtung gegenüber den Einfahröffnungen der Zahne (22) der erwähnten ersten Zahnung um einen vorbestimmten Betrag so versetzt sind, daß die genannten geneigten Einfahrrampen (24, 25, 50) sich gegenseitig berühren, wenn die Flanken (31, 32) der Einkerbungen (27) an den Flanken der Klauenzähne (41) des Leerlaufritzels (3, 4) anliegen.

2. Synchronisierungsanordnung nach Anspruch 1, dadurch gekennzeichnet, daß die Einkerbungen (27) durch die Zahnzwischenräume einer zweiten Zahnung gebildet sind, die entlang des gesamten Innenumfangs des vorderen Teils (21) des Rings (15) vorgesehen ist.

3. Synchronisierungsanordnung nach Anspruch 2, dadurch gekennzeichnet, daß die Teilung der zweiten Zahunung das Doppelte der Teilung der ersten Zahnung beträgt.

4. Synchronisierungsanordnung nach Anspruch 2 oder 3, dadurch gekennzeichnet, daß jeder zweite Zahn (42) der Klauenzahnung des Leerlaufritzels im wesentlichen in halber Höhe abgeschnitten ist entsprechend einer mit der Achse der Anordnung konzentrischen, zylindrischen Zentrierungsfläche (45), die mit der Zylinderfläche (29) der ebenfalls im wesentlichen in halber Höhe abgeschnittenen Zähne (28) der zweiten Zahnung des Rings (15) zusammenwirkt.

5. Synchronisierungsanordnung nach einem der vorgehenden Ansprüche, dadurch gekennzeichnet, daß sie einen elastischen Spreng-Haltering (36) aufweist, der in eine Innennut (35) eingesetzt ist, die den vorderen und den hinteren Teil (21, 22) des Rings (15) voneinander trennt, und im Ruhezustand in eine Außennut (46) des Leerlaufritzels (3, 4) so eingreifen kann, daß er gegen die Eingriffsbewegung des Rings (15) auf dem Leerlaufritzel (3, 4) eine Kraft ausübt.

6. Synchronisierungsanordnung nach Anspruch 5, dadurch gekennzeichnet, daß jeder zweite Zahn (41) der Klauenzahnung auf dem Leerlaufritzel mit einer Schräge (44) für eine axiale Rückstellung ausgeführt ist, mit der der elastische Sprengring (36) bei der Eingriffsbewegung des Ringes (15) auf dem Leerlaufritzel zusammenwirken kann.

7. Synchronisieranordnung nach einem der vorgehenden Ansprüche, dadurch gekennzeichnet, daß das Schieberad (10) eine innere Klauenzahnung (47) aufweist, die mit einer äußeren Zahnung (53) auf der Nabe (5) kämmt, auf der es verschiebbar angeordnet ist, wobei die innere Zahnung (47) mit der äußeren Klauenzahnung (19) des Leerlaufritzels (3, 4) zusammenwirken kann.

8. Synchronisierungsanordnung nach Anspruch 7, dadurch gekennzeichnet, daß die Zähnzwischenräume der Zahnung des Schieberads (10) einen Freiraum (48) belassen, der den aktiven Teil der Zähne (47) begrenzt, die mit dem des Leerlaufritzels (3, 4) in Berührung stehen.

9. Synchronisierungsanordnung nach Anspruch 7 oder 8, dadurch gekennzeichnet, daß die Flanken der Klauenzahnung des Schieberads (10) und des Leerlaufritzels (3, 4) über einem Teil ihrer Höhe konische Eingriffsflächen (51, 52) in Schwalbenschwanzform bilden, die es erlauben, ein Lösen des Klaueneingriffs im eingerückten Zustand zu vermeiden.

10. Synchronisierungsanordnung nach einem der vorgehenden Ansprüche, dadurch gekennzeichnet, daß der Synchronisierungsring (15) eine allgemein einfache, im wesentlichen trapezförmige Querschnittsfläche hat.

11. Synchronisierungsanordnung nach einem der vorgehenden Ansprüche, dadurch gekennzeichnet, daß sie ein Doppelschieberad (10) mit zwei konischen Innenflächen (12) und zwei identische Synchronisierungsringe (15) aufweist, die symmetrisch an jeder Seite des Schieberades (10) angeordnet sind und jeweils mit einer Klauenzahnung (19) des Leerlaufritzels (3, 4) und einem elastischen Spreng-Haltering (36) zusammenarbeiten.

**Claims**

1. Synchroniser for a positively engaged gearbox which is capable of preventing the positive engagement whilst there is no equality of the respective rotation speeds of an idle gear (3, 4) mounted in freely rotatable manner on a shaft (1), and of a sliding gear (10) mounted on a hub (5) which is integral with the said shaft, the sliding gear (10) turning with the hub (5) and being capable of sliding axially in relation to the hub, of the type comprising: a synchronising ring (15) provided with a conical external surface (14) adapted to co-operate with a conical internal surface (12) of the sliding gear, and means for indexing in rotation, adapted to co-operate with stop means which are integral with the idle gear; and a flexible retainer ring (36) for return of the synchronising ring (15); the synchronising ring comprising on all the internal circumference of its rear part (20) a first toothing (22, 23) capable of meshing with an external toothing which is for positive engagement (41, 42, 43), arranged on all the circumference of a portion (18) of the idle gear (3, 4), all the teeth of the two aforesaid toothings comprising tooth entries which are provided with sloping engagement ramps (24, 25, 50) adapted to come into contat with one another; characterised by the fact that the synchronizing ring (15) additionally comprises on all the internal circumference of its front part (21) a plurality of recesses (27) whose flanks (31, 32) are offset in the peripheral direction in relation to the tooth entries (22) of the aforesaid first toothing, by a predetermined amount, in such a way that the aforesaid engagement ramps (24, 25, 50) are in contact when the flanks (31, 32) of the said recesses (27) are in contact with the flanks of the positive engagement teeth (41) of the idle gear (3, 4).

2. Synchroniser according to claim 1, characterised by the fact that the aforesaid recesses (27) are constituted by the tooth spaces of a second toothing arranged on all the internal circumference of the front part (21) of the ring (15).

3. Synchroniser according to claim 2, characterised by the fact that the pitch of the second toothing is double that of the first toothing.

4. Synchroniser according to claims 2 or 3, characterised by the fact that one tooth out of two (42) of the positive engagement toothing of the idle gear is cut off at substantially half its height in accordance with a cylindrical centering surface (45) concentric to the axis of the device and co-operating with the cylindrical surface (29) — which is likewise cut off at substantially half its height — of the teeth (28) of the second toothing of the ring (15).

5. Synchroniser according to any one of the preceding claims, characterised by the fact that it comprises a flexible retainer ring (36) enclosed within an internal groove (35) which separates the front and rear parts (21, 20) of the ring (15) and capable of being accommodated, when at rest, in an external groove (46) of the idle gear (3, 4) in such a way as to exert a traction against the engagement movement of the ring (15) on the idle gear (3, 4).

6. Synchroniser according to claim 5, characterised by the fact that one tooth out of two (41) of the positive engagement toothing of the idle gear has an axial return slope (44) with which the flexible retainer ring (36) can co-operate during the engagement movement of the ring (15) on the idle gear.

7. Synchroniser according to any one of the preceding claims, characterised by the fact that the sliding gear (10) comprises an internal positive engagement toothing (47) meshing with an external toothing (53) of the hub (5) on which it is mounted slidingly, the said internal toothing (47) being capable of co-operating with the external positive engagement toothing (19) of the idle gear (3, 4).

8. Synchroniser according to claim 7, characterised by the fact that the tooth spaces of the toothing of the sliding gear (10) have a disengagement space (48) limiting the active part of the teeth (47) in contact with that of the gear (3, 4).

9. Synchroniser according to claims 7 or 8, characterised by the fact that the flanks of the positive engagement toothings of the sliding gear (10) and of the idle gear (3, 4) have, on a part of their height, dovetailed conical coupling surfaces (51, 52) which make it possible to prevent the release of the positive engagement in the coupled state.

10. Synchroniser according to any one of the preceding claims, characterised by the fact that the synchronising ring (15) has a cross section of generally simple shape, substantially trapezoidal.

11. Synchroniser according to any one of the preceding claims, characterised by the fact that it comprises a double sliding gear (10) provided with two internal conical surfaces (12), two identical synchronising rings (15) arranged symmetrically on each side of the sliding gear (10) and each co-operating with a positive engagement toothing (19) of the idle gear (3, 4), and a flexible retainer ring (36).

FIG.1

0 100 025

## FIG.2

## FIG.3

## FIG.4

35  36

41  42  41  42

## FIG.5

48  44  48  48

47  42  47  41  47  42

## FIG.6

## FIG.7

## FIG.8